# FASCICULE DE BREVET EUROPEEN

(11) **EP 3 994 518 B1**
(45) Date de publication et mention de la délivrance du brevet: **19.07.2023**
(21) Numéro de dépôt: 20747064.2
(22) Date de dépôt: 02.07.2020
(51) Int. Cl.: G02C 1/06, G02C 5/00, B29D 12/02, G02C 5/18, B29C 65/00

(54) **PROCÉDÉ D'HABILLAGE D'UN ÉLÉMENT PRIMAIRE POUR DES LUNETTES OPTIQUES AVEC DES ORGANES PRIMAIRES MOULÉS À BASE DE PARTICULES DE LIÈGE**
VERFAHREN ZUR ABDECKUNG EINES PRIMÄRELEMENTS FÜR OPTISCHE BRILLE MIT AUS KORKPARTIKELN GEFORMTEN PRIMÄRELEMENTEN
METHOD FOR COVERING A PRIMARY ELEMENT FOR OPTICAL SPECTACLES WITH PRIMARY MEMBERS MOULDED FROM CORK PARTICLES

(30) Priorité: 02.07.2019 FR 1907321
(43) Date de publication de la demande: 11.05.2022
(73) Titulaire: Killine Optical Ltd, Macao (MO)
(72) Inventeur: JACQUIER, Hervé François Serge, 1300-085 LISBONNE (PT); LEFEBVRE, Marc René André Louis, MACAO (MO)
(74) Mandataire: Germain Maureau
(86) Numéro de dépôt international: PCT/FR2020/051158
(87) Numéro de publication internationale: WO 2021/001632

(56) Documents cités:
- ES-A1- 2 412 554
- FR-A- 1 560 647
- JP-U- S60 154 916
- Anonymous: "Des montures en liège, le défi de Cara D'Pau ! | Acuité", , 26 novembre 2015 (2015-11-26), XP055692226, Extrait de l'Internet: URL:https://www.acuite.fr/actualite/collec tion/83192/des-montures-en-liege-le-defi-d e-cara-dpau [extrait le 2020-05-06]

## Description

L'invention se rapporte au domaine technique de l'habillage d'un élément primaire pour des lunettes optiques, et en particulier d'une armature de branche ou d'un verre.

L'invention trouve son application dans la confection des branches de lunettes, des montures de façade (qui supporte les deux verres) voire des lunettes optiques en intégralité.

L'invention s'intéresse plus particulièrement à la mise en oeuvre d'un enchâssement au moins partiel d'un élément primaire pour des lunettes optiques, par une garniture d'habillage externe composée en partie de liège.

Le liège constitue un matériau aux multiples qualités : origine naturelle, résistance au choc, malléabilité, imperméabilité, caractère hypoallergénique, imputrescibilité, durabilité, confort thermique, flottabilité, etc.

Il est ainsi connu du document KR 20150134668A d'habiller une armature de branche au moyen de feuilles de liège prédécoupées, cousues entre elles, plaquées et encollées autour de l'armature de branche, ce qui présente plusieurs inconvénients : épaisseur fine des feuilles de liège, la forme de la branche est donnée par l'armature de branche - et pas par les feuilles de liège - limitant ainsi l'esthétique, et imposant aussi de nombreuses étapes (découpe, couture, plaquage et encollage).

Des lunettes ayant un habillage en liège sont connues de "Des montures en liège, le défi de Cara D'Pau", publié sur le site www.acuite.fr, XP55692226 ou de ES 2 412 554 B1. Un procédé d'habillage par moulage est divulgué dans JPS60154916U.

L'invention vise à remédier en tout ou partie aux inconvénients précités en proposant un procédé d'habillage d'un élément primaire pour des lunettes optiques, qui permet d'obtenir une garniture d'habillage externe composée en partie de liège et à l'esthétique maîtrisé, et avec une épaisseur contrôlée et en particulier des épaisseurs élevées comparativement à celles procurées par des feuilles de liège de l'état de la technique.

A cet effet, l'invention a pour objet un procédé d'habillage d'un élément primaire pour des lunettes optiques, dans lequel est mis en oeuvre un enchâssement au moins partiel de l'élément primaire par une garniture d'habillage externe afin d'obtenir un élément fonctionnel de lunettes optiques, ledit procédé d'habillage étant remarquable en ce qu'il comprend les étapes suivantes :
- préparation d'une composition de moulage comprenant au moins un mélange de particules de liège dans un matériau élastomère thermoformable ;
- réalisation d'un premier organe d'enchâssement et d'un second organe d'enchâssement par un moulage de la composition de moulage, le premier organe d'enchâssement présentant une première face externe et une première face interne dans laquelle est ménagée une première rainure bordée par au moins une première zone d'appui, et le second organe d'enchâssement présentant une seconde face externe et une seconde face interne dans laquelle est ménagée une seconde rainure bordée par au moins une seconde zone d'appui ;
- positionnement du premier organe d'enchâssement et du second organe d'enchâssement autour de l'élément primaire, de sorte que ledit élément primaire soit positionné à l'intérieur de la première rainure et de la seconde rainure, et que l'au moins une première zone d'appui et l'au moins une seconde zone d'appui soient au contact l'une de l'autre ;
- solidarisation de l'au moins une première zone d'appui et de l'au moins une seconde zone d'appui, de sorte que le premier organe d'enchâssement et le second organe d'enchâssement forme la garniture d'habillage externe enchâssant au moins partiellement l'élément primaire.

Ainsi, un tel procédé permet d'avoir une garniture d'habillage externe composée en partie de liège (du fait du mélange de particules de liège) et à l'esthétique maîtrisé (du fait du moulage des premier et second éléments primaires d'enchâssement), dans la mesure où la forme va être donnée par ces premier et second éléments primaires d'enchâssement.

Par ailleurs, les premier et second éléments primaires d'enchâssement sont solidarisés bord à bord au niveau de leurs zones d'appui respectives, sans que ces premier et second éléments primaires d'enchâssement soient fixés sur l'élément primaire, cet élément primaire restant donc libre à l'intérieur de la garniture d'habillage externe.

Selon une caractéristique, les particules de liège présentent une granulométrie comprise entre 0,2 et 1 millimètre.

Une telle granulométrie est en effet particulièrement adaptée pour répondre aux dimensions classiques des lunettes optiques, pour avoir une forme de la garniture d'habillage externe avec un niveau de détails amélioré.

Selon une possibilité, le matériau élastomère thermoformable est choisi parmi un élastomère thermoplastique, comme par exemple un polyuréthane, ou un élastomère naturel, comme par exemple un caoutchouc.

Il est en particulier envisageable d'employer un polyuréthane certifié FDA « Food and Drug Administration », autrement appelé « PU FDA », qui présente l'avantage d'obtenir des organes d'enchâssement souples et d'un toucher doux.

De manière générale, il est bien entendu avantageux de jouer avec la densité du matériau élastomère thermoformable ainsi qu'avec les proportions entre les particules de liège et le matériau élastomère thermoformable.

Selon une autre possibilité, la composition de moulage comprend, en pourcentage massique, entre 60 et 90 % de mélange de particules de liège et entre 10 et 30 % de matériau élastomère thermoformable.

En effet, de telles proportions sont avantageuses pour le côté esthétique du liège qui sera bien visible sur la garniture d'habillage externe, tout en offrant un contrôle de l'élasticité/rigidité de la garniture d'habillage externe au moyen du matériau élastomère thermoformable.

Selon une autre possibilité, la solidarisation de l'au moins une première zone d'appui et de l'au moins une seconde zone d'appui est réalisée par un encollage entre l'au moins une première zone d'appui et l'au moins une seconde zone d'appui qui sont au contact.

Ainsi, les premier et second éléments primaires d'enchâssement sont collés bord à bord au niveau de leurs zones d'appui respectives.

Dans un mode de réalisation particulier, l'élément primaire est une armature de branche pour les lunettes optiques, de sorte que l'élément fonctionnel constitue une branche de lunettes optiques.

Ainsi, à l'issue du procédé d'habillage appliqué à une armature de branche, il est obtenu une branche composée au moins en partie de l'armature de branche enchâssée dans la garniture d'habillage externe.

Avantageusement, la première rainure est bordée par deux premières zones d'appui s'étendant de part et d'autre de la première rainure, la seconde rainure est bordée par deux secondes zones d'appui s'étendant de part et d'autre de la seconde rainure, de sorte que l'armature de branche est complètement enchâssée à l'intérieur de la garniture d'habillage externe.

Ainsi, l'armature de branche n'est plus visible et constitue la structure interne de la branche obtenue à l'issue du procédé d'habillage, étant noté que la garniture d'habillage externe peut s'étendre sur toute ou partie de la longueur de l'armature de branche.

Dans un autre mode de réalisation particulier, l'élément primaire est une paire de verres pour les lunettes optiques, de sorte que l'élément fonctionnel constitue une façade de lunettes optiques.

Ainsi, à l'issue du procédé d'habillage appliqué à la paire de verres, il est obtenu une façade composée des deux verres supportés par la garniture d'habillage externe ; une telle garniture d'habillage externe formant ainsi une monture de façade propre à supporter les deux verres.

Avantageusement, la première rainure est bordée par une unique première zone d'appui, la seconde rainure est bordée par une unique seconde zone d'appui, de sorte que le verre est partiellement enchâssé à l'intérieur de la garniture d'habillage externe avec des bordures de la paire de verres enchâssées à l'intérieur de la garniture d'habillage externe.

L'invention se rapporte également à un élément fonctionnel de lunettes optiques, comprenant un élément primaire enchâssé au moins partiellement à l'intérieur d'une garniture d'habillage externe, ledit élément fonctionnel étant remarquable en ce que l'élément primaire est habillé de la garniture d'habillage externe par la mise en oeuvre du procédé d'habillage selon l'invention, de sorte que :
- la garniture d'habillage externe est formé d'un premier organe d'enchâssement et d'un second organe d'enchâssement obtenu par un moulage d'une composition de moulage comprenant au moins un mélange de particules de liège dans un matériau élastomère thermoformable ;
- le premier organe d'enchâssement présente une première face externe et une première face interne dans laquelle est ménagée une première rainure bordée par au moins une première zone d'appui, et le second organe d'enchâssement présente une seconde face externe et une seconde face interne dans laquelle est ménagée une seconde rainure bordée par au moins une seconde zone d'appui ;
- l'élément primaire est positionné à l'intérieur de la première rainure et de la seconde rainure, et l'au moins une première zone d'appui et l'au moins une seconde zone d'appui sont au contact l'une de l'autre et sont solidarisées l'une à l'autre.

Dans une réalisation particulière, l'élément primaire est une armature de branche pour les lunettes optiques, de sorte que l'élément fonctionnel constitue une branche de lunettes optiques.

Selon une caractéristique, la première rainure est bordée par deux premières zones d'appui s'étendant de part et d'autre de ladite première rainure, la seconde rainure est bordée par deux secondes zones d'appui s'étendant de part et d'autre de ladite seconde rainure, de sorte que l'armature de branche est complètement enchâssée à l'intérieur de la garniture d'habillage externe.

Dans une autre réalisation particulière, l'élément primaire est une paire de verres pour les lunettes optiques, de sorte que l'élément fonctionnel constitue une façade de lunettes optiques.

Selon une caractéristique, la première rainure est bordée par une unique première zone d'appui, la seconde rainure est bordée par une unique seconde zone d'appui, de sorte que la paire de verres est partiellement enchâssée à l'intérieur de la garniture d'habillage externe avec des bordures de la paire de verres enchâssées à l'intérieur de la garniture d'habillage externe.

L'invention concerne aussi des lunettes optiques comprenant deux branches telles que décrites ci-dessus, c'est-à-dire deux branches composées chacune d'une armature de branche enchâssée au moins partiellement à l'intérieur d'une garniture d'habillage externe à l'issue d'un procédé d'habillage selon l'invention.

L'invention concerne également des lunettes optiques comprenant une façade telle que décrite ci-dessus, c'est-à-dire une façade composée d'une paire de verres enchâssée partiellement à l'intérieur d'une garniture d'habillage externe à l'issue d'un procédé d'habillage selon l'invention.

Dans une réalisation avantageuse, les deux branches sont articulées par des charnières sur la façade.

D'autres caractéristiques et avantages de la présente invention apparaîtront à la lecture de la description détaillée ci-après, d'un exemple de mise en oeuvre non limitatif, faite en référence aux figures schématiques annexées dans lesquelles :
[Fig.1] est une vue schématique de face de lunettes optiques selon l'invention, ; obtenue par la mise en oeuvre d'un procédé d'habillage conforme à l'invention ;
[Fig.2] est une vue schématique de côté des lunettes optiques de la figure 1 ;
[Fig.3] est une vue schématique en coupe des lunettes optiques des figures 1 et 2, selon un plan de coupe A-A visible en figure 1 et qui coupe dans la façade, avec une version non éclatée (à gauche) et une version éclatée (à droite) ;

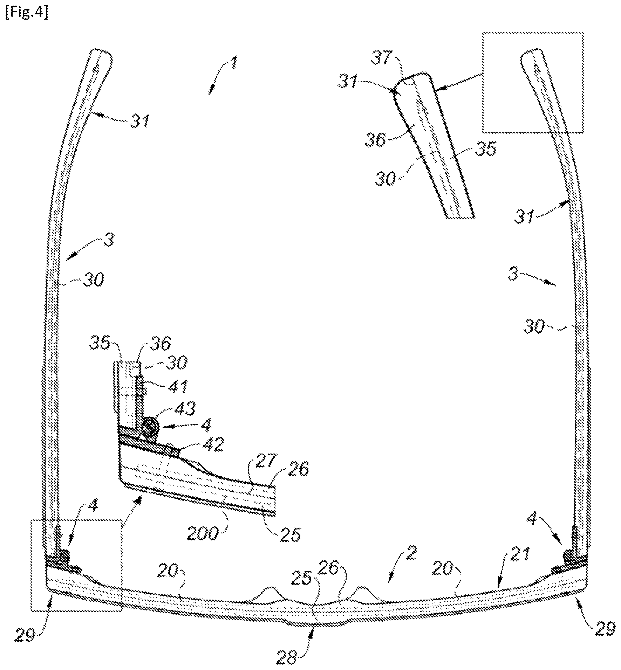

[Fig.4] est une vue schématique de dessus des lunettes optiques des figures 1 et 2, avec deux zooms sur deux zones distinctes ;
[Fig.5] est une vue schématique en coupe des lunettes optiques des figures 1 et 2, selon un plan de coupe B-B visible en figure 2 et qui coupe dans la branche, avec une version non éclatée (à gauche) et une version éclatée (à droite) ;
[Fig.6] est une vue schématique en coupe des lunettes optiques des figures 1 et 2, selon un plan de coupe C-C visible en figure 2 et qui coupe dans la branche, avec une version non éclatée (à gauche) et une version éclatée (à droite) ;
[Fig.7] est une vue schématique en coupe des lunettes optiques des figures 1 et 2, selon un plan de coupe D-D visible en figure 2 et qui coupe dans la branche avec une version non éclatée (à gauche) et une version éclatée (à droite).

En référence aux figures, des lunettes optiques 1, selon un exemple de réalisation non limitatif de l'invention, comprennent :
- une façade 2 comprenant une paire de verres 20 enchâssée partiellement à l'intérieur d'une monture de façade 21, cette monture de façade 21 formant une garniture d'habillage externe pour la paire de verres ;
- deux branches 3 comprenant chacune une armature de branche 30 enchâssée à l'intérieur d'un manchon 31, ce manchon 31 formant une garniture d'habillage externe pour l'armature de branche 30 correspondante.

L'enchâssement de la paire de verres 20 par la monture de façade 21 pour former la façade 2 est obtenu à l'issue d'un procédé d'habillage de la paire de verres 20. De même, l'enchâssement de chaque armature de branche 30 par le manchon 31 correspondant pour former la branche 3 concernée est obtenu à l'issue d'un procédé d'habillage de chacune des deux armatures de branche 30.

Les deux verres 20 sont par exemple des verres de correction ou des verres neutres sans correction et/ou des verres teintés, des verres fumés ou des verres non teintés. Les deux verres 20 sont par exemple des verres dissociés, ou en variante des verres associés sous la forme d'un masque d'un seul tenant.

Ce procédé d'habillage comprend une étape de préparation d'une composition de moulage comprenant au moins un mélange de particules de liège dans un matériau élastomère thermoformable.

Les particules de liège présentent une granulométrie comprise entre 0,2 et 1 millimètre. Le matériau élastomère thermoformable est choisi parmi un élastomère thermoplastique, comme par exemple un polyuréthane, ou un élastomère naturel, comme par exemple un caoutchouc. La composition de moulage comprend, en pourcentage massique, entre 60 et 90 % de mélange de particules de liège et entre 10 et 30 % de matériau élastomère thermoformable.

La composition de moulage peut également intégrer des additifs, comme par exemple et à titre non limitatif un colorant qui permet une coloration dans la masse, un agent réticulant, un agent catalyseur, etc.

Il est à noter que la composition de moulage peut différer selon qu'elle sert à l'enchâssement de la paire de verres 20 par la monture de façade 21 ou à l'enchâssement des armatures de branche 30 par les manchons 31. En effet, il peut être avantageux d'avoir une monture 21 qui présente une plus grande rigidité que les manchons 31, tout en gardant une résistance à l'impact, et d'avoir des manchons 31 avec une plus grande flexibilité que la monture de façade 21 pour autoriser une déformation/flexion des branches 3 répondant à des ajustements personnalisés demandés dans l'optique.

La monture de façade 21 est réalisée par l'assemblage et la solidarisation de deux organes d'enchâssement 25, 26, à savoir un premier organe d'enchâssement 25 tourné sur l'extérieur des lunettes optiques 1 et un second organe d'enchâssement 25 tourné sur l'intérieur des lunettes optiques 1 (face au visage du porteur), où ces deux organes d'enchâssement 25, 26 sont obtenus par un moulage de la composition de moulage, en l'occurrence la composition de moulage dédiée à la monture de façade 21.

De même, chaque manchon 31 est réalisé par l'assemblage et la solidarisation de deux organes d'enchâssement 35, 36, à savoir un premier organe d'enchâssement 35 tourné sur l'extérieur des lunettes optiques 1 et un second organe d'enchâssement 36 tourné sur l'intérieur des lunettes optiques 1, où ces deux organes d'enchâssement 35, 36 sont obtenus par un moulage de la composition de moulage, en l'occurrence la composition de moulage dédiée au manchon 31 qui peut être distincte de la composition de moulage dédiée à la monture de façade 21.

La suite de la description porte sur le procédé d'habillage de la paire de verres 20, en vue de réaliser la façade 2 avec la monture de façade 21 qui enchâsse la paire de verres 20.

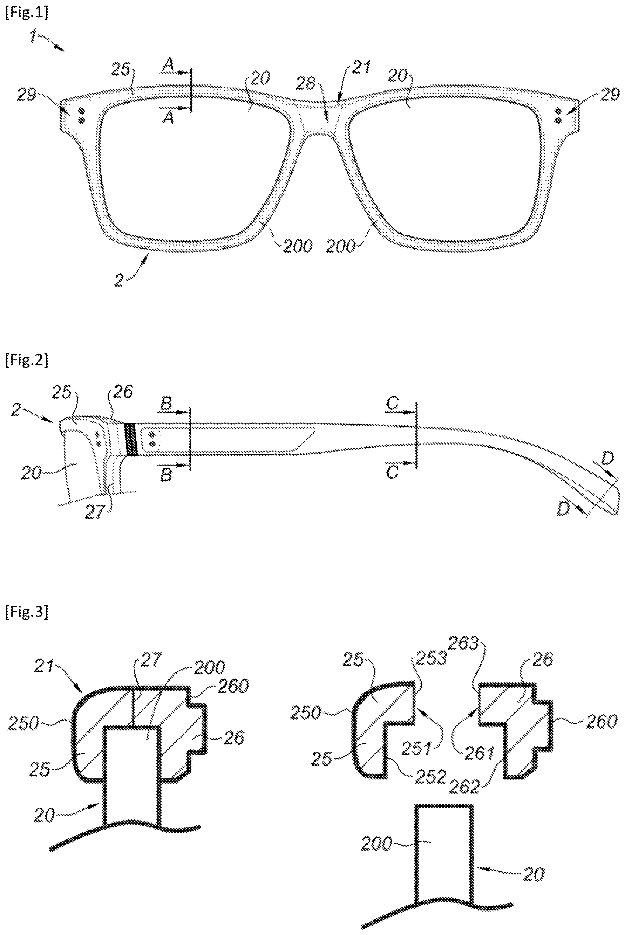

Ce procédé d'habillage de la paire de verres 20 met en oeuvre une étape de réalisation du premier organe d'enchâssement 25 et du second organe d'enchâssement 26 par un moulage de la composition de moulage concernée, où comme illustré sur la figure 3 :
- le premier organe d'enchâssement 25 présente une première face externe 250 et une première face interne 251 dans laquelle est ménagée une première rainure 252 bordée par une unique première zone d'appui 253 plane, et
- le second organe d'enchâssement 26 présente une seconde face externe 260 et une seconde face interne 261 dans laquelle est ménagée une seconde rainure 262 bordée par une unique seconde zone d'appui 263 plane.

Lors de l'opération de moulage, les conditions de température et de pression dépendront notamment de la composition de moulage (proportion et granulométrie des particules de liège, choix du matériau élastomère thermoformable) étant noté que la température se situera par exemple entre 90 et 140 °C et la pression se situera par exemple entre 120 et 160 bars.

Ce procédé d'habillage de la paire de verres 20 met ensuite en oeuvre une étape de positionnement du premier organe d'enchâssement 25 et du second organe d'enchâssement 26 autour des bordures 200 de la paire de verres 20, de sorte que les bordures 200 de la paire de verres 20 soit positionnées à l'intérieur de la première rainure 252 et de la seconde rainure 262, et que la première zone d'appui 253 et la seconde zone d'appui 263 soient au contact l'une de l'autre selon un plan de joint 27. Ce procédé d'habillage de la paire de verres 20 met ensuite en oeuvre une étape de solidarisation, par exemple par encollage ou par soudage thermique, de la première zone d'appui 253 et de la seconde zone d'appui 263, de sorte que le premier organe d'enchâssement 25 et le second organe d'enchâssement 26 forme la monture de façade 21 enchâssant les bordures 200 de la paire de verres 20.

Il est avantageux de retenir la solution de solidarisation par encollage, par exemple en utilisant une colle vinylique ou colle à bois. Cette étape de solidarisation n'a pour but que de relier les organes d'enchâssement 25, 26 entre eux, mais pas de fixer la paire de verres 20 sur les organes d'enchâssement 25, 26, cette paire de verres 20 devant rester libre à l'intérieur des rainures 252, 262.

Ainsi, en situation, la première rainure 252 et la seconde rainure 262 forment ensemble une glissière débouchant extérieurement et à l'intérieur de laquelle sont insérées les bordures 200 de la paire de verres 20.

Il est à noter que les formes géométriques et/ou les dimensions (notamment les épaisseurs) du premier organe d'enchâssement 25 et du second organe d'enchâssement 26 peuvent varier le long des bordures 200 de la paire de verres 20, en particulier pour avoir une monture de façade 21 qui présente au milieu, entre les deux verres 20, une arche centrale 28 propre à reposer sur le nez du porteur, et qui présente sur les côtés des ailes latérales 29 sur lesquelles sont articulées les branches 3 respectives.

La suite de la description porte sur le procédé d'habillage d'une armature de branche 30, en vue de réaliser une branche 3 avec le manchon 31 qui enchâsse l'armature de branche 30.

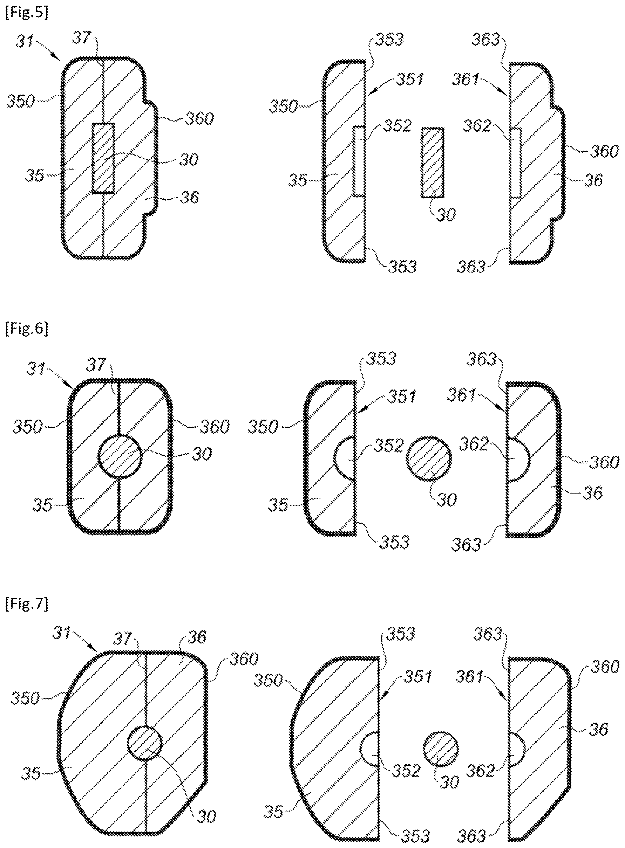

Ce procédé d'habillage de l'armature de branche 30 met en oeuvre une étape de réalisation du premier organe d'enchâssement 35 et du second organe d'enchâssement 36 par un moulage de la composition de moulage concernée, où comme illustré sur les figures 5 à 7 :
- le premier organe d'enchâssement 35 présente une première face externe 350 et une première face interne 351 dans laquelle est ménagée une première rainure 352 bordée par deux premières zones d'appui 353 planes et coplanaires, ces deux premières zones d'appui 353 s'étendant de part et d'autre de la première rainure 352 ; et
- le second organe d'enchâssement 36 présente une seconde face externe 360 et une seconde face interne 361 dans laquelle est ménagée une seconde rainure 362 bordée par deux secondes zones d'appui 363 planes et coplanaires, ces deux secondes zones d'appui 363 s'étendant de part et d'autre de la seconde rainure 362.

Ce procédé d'habillage de l'armature de branche 30 met ensuite en oeuvre une étape de positionnement du premier organe d'enchâssement 35 et du second organe d'enchâssement 36 autour de l'armature de branche 30, de sorte que l'armature de branche 30 soit positionnée à l'intérieur de la première rainure 352 et de la seconde rainure 362, et que les deux premières zones d'appui 353 et les deux secondes zones d'appui 263 soient au contact respectifs l'une de l'autre selon un plan de joint 37.

Ce procédé d'habillage de l'armature de branche 30 met ensuite en oeuvre une étape de solidarisation, par exemple par encollage ou par soudage thermique, des deux premières zones d'appui 353 et des deux secondes zones d'appui 263 respectivement de sorte que le premier organe d'enchâssement 35 et le second organe d'enchâssement 36 forme le manchon 31 enchâssant complètement l'armature de branche 30.

Il est avantageux de retenir la solution de solidarisation par encollage, par exemple en utilisant une colle vinylique ou colle à bois. Cette étape de solidarisation n'a pour but que de relier les organes d'enchâssement 35, 36 entre eux, mais pas de fixer l'armature de branche 30 sur les organes d'enchâssement 35, 36, cette armature de branche 30 devant rester libre à l'intérieur des rainures 352, 362.

Ainsi, en situation, la première rainure 352 et la seconde rainure 362 forment ensemble un canal interne clos à l'intérieur duquel est insérée l'armature de branche 30. Comme visible sur les figures 5 à 7, la section des rainures 352, 362 peut varier le long de l'armature de branche 30, que ce soit dans leurs formes géométriques et/ou dans leurs dimensions. De même, les formes géométriques et/ou les dimensions (notamment les épaisseurs) du premier organe d'enchâssement 35 et du second organe d'enchâssement 36 peuvent varier le long de l'armature de branche 30.

Une fois les branches 3 et la façade 2 réalisées, il suffit de fixer les branches 3 sur les ailes latérales 29 respectives de la monture de façade 21 au moyen de charnières 4, de sorte que les deux branches 3 sont articulées par ces charnières 4 sur la façade 2. Chaque charnière 4 comprend :
- un premier charnon 41 fixé sur une branche 3, et en particulier fixé sur la seconde face externe 360 du second organe d'enchâssement 36 ; et
- un second charnon 42 couplé au premier charnon 41 via un axe pivot 43, où ce second charnon 42 est fixé sur la façade 2, et en particulier fixé sur la seconde face externe 260 du second organe d'enchâssement 26.

Les charnons 41, 42 sont par exemple fixés par rivetage ou par vissage, de sorte que des rivets ou vis permettant de créer mécaniquement un ensemble cohérent et résistant, même si d'autres options de fixation peuvent être envisagées. Des rivets ou des vis peuvent éventuellement traverser les verres 20 et/ou les armatures 30 pour une tenue mécanique accrue.

Il est à noter que, lors des opérations de moulage des organes d'enchâssement 25, 26, 35, 36, des motifs, des décors, des emplacements de réception d'inserts (par exemple de type logo) et/ou des réserves à vocation plus mécaniques pour les charnons 41, 42 peuvent être prévus directement dans les moules concernés, ou en variante peuvent être prévus par un usinage post-moulage.

## Revendications

1. Procédé d'habillage d'un élément primaire (20; 30) pour des lunettes optiques (1), dans lequel est mis en oeuvre un enchâssement au moins partiel de l'élément primaire (20; 30) par une garniture d'habillage externe (21; 31) afin d'obtenir un élément fonctionnel (2; 3) de lunettes optiques (1), ledit procédé d'habillage étant **caractérisé en ce qu'**il comprend les étapes suivantes :
- préparation d'une composition de moulage comprenant au moins un mélange de particules de liège dans un matériau élastomère thermoformable ;
- réalisation d'un premier organe d'enchâssement (25; 35) et d'un second organe d'enchâssement (26; 36) par un moulage de la composition de moulage, le premier organe d'enchâssement (25; 35) présentant une première face externe (250; 350) et une première face interne (251; 351) dans laquelle est ménagée une première rainure (252; 352) bordée par au moins une première zone d'appui (253; 353), et le second organe d'enchâssement (26; 36) présentant une seconde face externe (260; 360) et une seconde face interne (261; 361) dans laquelle est ménagée une seconde rainure (263; 362) bordée par au moins une seconde zone d'appui (263; 363) ;
- positionnement du premier organe d'enchâssement (25; 35) et du second organe d'enchâssement (26; 36) autour de l'élément primaire (20; 30), de sorte que ledit élément primaire (20; 30) soit positionné à l'intérieur de la première rainure (252; 352) et de la seconde rainure (263; 362), et que l'au moins une première zone d'appui (253; 353) et l'au moins une seconde zone d'appui (263; 363) soient au contact l'une de l'autre ;
- solidarisation de l'au moins une première zone d'appui (253; 353) et de l'au moins une seconde zone d'appui (263; 363), de sorte que le premier organe d'enchâssement (25; 35) et le second organe d'enchâssement (26; 36) forment la garniture d'habillage externe (21; 31) enchâssant au moins partiellement l'élément primaire (20; 30).

2. Procédé d'habillage selon la revendication 1, dans lequel les particules de liège présentent une granulométrie comprise entre 0,2 et 1 millimètre.

3. Procédé d'habillage selon l'une quelconque des revendications 1 et 2, dans lequel le matériau élastomère thermoformable est choisi parmi un élastomère thermoplastique, comme par exemple un polyuréthane, ou un élastomère naturel, comme par exemple un caoutchouc.

4. Procédé d'habillage selon l'une quelconque des revendications 1 à 3, dans lequel la composition de moulage comprend, en pourcentage massique, entre 60 et 90 % de mélange de particules de liège et entre 10 et 30 % de matériau élastomère thermoformable.

5. Procédé d'habillage selon l'une quelconque des revendications 1 à 4, dans lequel la solidarisation de l'au moins une première zone d'appui (253; 353) et de l'au moins une seconde zone d'appui (263; 363) est réalisée par un encollage entre l'au moins une première zone d'appui (253; 353) et l'au moins une seconde zone d'appui (263; 363) qui sont au contact.

6. Procédé d'habillage selon l'une quelconque des revendications 1 à 5, dans lequel l'élément primaire est une armature de branche (30) pour les lunettes optiques (1), de sorte que l'élément fonctionnel constitue une branche (3) de lunettes optiques (1).

7. Procédé d'habillage selon la revendication 6, dans lequel la première rainure (352) est bordée par deux premières zones d'appui (353) s'étendant de part et d'autre de ladite première rainure (352), la seconde rainure (362) est bordée par deux secondes zones d'appui (363) s'étendant de part et d'autre de ladite seconde rainure (362), de sorte que l'armature de branche (30) est complètement enchâssée à l'intérieur de la garniture d'habillage externe (31).

8. Procédé d'habillage selon l'une quelconque des revendications 1 à 5, dans lequel l'élément primaire est une paire de verres (20) pour les lunettes optiques (1), de sorte que l'élément fonctionnel constitue une façade (2) de lunettes optiques (1).

9. Procédé d'habillage selon la revendication 8, dans lequel la première rainure (252) est bordée par une unique première zone d'appui (253), la seconde rainure (263) est bordée par une unique seconde zone d'appui (263), de sorte que la paire de verres (20) est partiellement enchâssé à l'intérieur de la garniture d'habillage externe (21) avec des bordures (200) de la paire de verres (20) enchâssées à l'intérieur de la garniture d'habillage externe (21).

10. Elément fonctionnel (2; 3) de lunettes optiques (1), comprenant un élément primaire (20; 30) enchâssé au moins partiellement à l'intérieur d'une garniture d'habillage externe (21; 31), ledit élément fonctionnel (2; 3) étant **caractérisé en ce que** l'élément primaire (20; 30) est habillé de la garniture d'habillage externe (21; 31) par la mise en oeuvre du procédé d'habillage selon l'une quelconque des revendications précédentes, de sorte que :
- la garniture d'habillage externe (21; 31) est formé d'un premier organe d'enchâssement (25; 35) et d'un second organe d'enchâssement (26; 36) obtenu par un moulage d'une composition de moulage comprenant au moins un mélange de particules de liège dans un matériau élastomère thermoformable ;
- le premier organe d'enchâssement (25; 35) présente une première face externe (250; 350) et une première face interne (251; 351) dans laquelle est ménagée une première rainure (252; 352) bordée par au moins une première zone d'appui (253; 353), et le second organe d'enchâssement (26; 36) présente une seconde face externe (260; 360) et une seconde face interne (261; 361) dans laquelle est ménagée une seconde rainure (263; 362) bordée par au moins une seconde zone d'appui (263; 363) ;
- l'élément primaire (20; 30) est positionné à l'intérieur de la première rainure (252; 352) et de la seconde rainure (263; 362), et l'au moins une première zone d'appui (253; 353) et l'au moins une seconde zone d'appui (263; 363) sont au contact l'une de l'autre et sont solidarisées l'une à l'autre.

11. Elément fonctionnel selon la revendication 10, dans lequel l'élément primaire est une armature de branche (30) pour les lunettes optiques (1), de sorte que l'élément fonctionnel constitue une branche (3) de lunettes optiques (1).

12. Elément fonctionnel selon la revendication 11, dans lequel la première rainure (352) est bordée par deux premières zones d'appui (353) s'étendant de part et d'autre de ladite première rainure (352), la seconde rainure (362) est bordée par deux secondes zones d'appui (363) s'étendant de part et d'autre de ladite seconde rainure (362), de sorte que l'armature de branche (30) est complètement enchâssée à l'intérieur de la garniture d'habillage externe (31).

13. Elément fonctionnel selon la revendication 10, dans lequel l'élément primaire est une paire de verres (20) pour les lunettes optiques (1), de sorte que l'élément fonctionnel constitue une façade (2) de lunettes optiques (1).

14. Elément fonctionnel selon la revendication 13, dans lequel la première rainure (252) est bordée par une unique première zone d'appui (253), la seconde rainure (263) est bordée par une unique seconde zone d'appui (263), de sorte que la paire de verres (20) est partiellement enchâssée à l'intérieur de la garniture d'habillage externe (21) avec des bordures (200) de la paire de verres (20) enchâssées à l'intérieur de la garniture d'habillage externe (21).

15. Lunettes optiques (1) comprenant deux branches (3) conformes à l'une quelconque des revendications 11 et 12.

16. Lunettes optiques (1) comprenant une façade (2) conforme à l'une quelconque des revendications 13 et 14.

17. Lunettes optiques (1) selon les revendications 15 et 16, dans lesquelles les deux branches (3) sont articulées par des charnières (4) sur la façade (2).

## Patentansprüche

1. Verfahren zur Abdeckung eines Primärelements (20; 30) für eine optische Brille (1), bei dem mindestens eine teilweise Einfassung des Primärelements (20; 30) durch eine äußere Abdeckblende (21; 31) umgesetzt wird, um ein Funktionselement (2; 3) einer optischen Brille (1) zu erhalten, wobei das Verfahren zur Abdeckung **dadurch gekennzeichnet ist, dass** es die folgenden Schritte umfasst:
- Vorbereiten einer Formgusszusammensetzung, welche mindestens ein Gemisch aus Korkteilchen in einem wärmeverformbaren Elastomer-Werkstoff umfasst;
- Fertigen eines ersten Einfassungsorgans (25; 35) und eines zweiten Einfassungsorgans (26; 36) durch Formguss der Formgusszusammensetzung, wobei das erste Einfassungsorgan (25; 35) eine erste Außenfläche (250; 350) und eine erste Innenfläche (251; 351) aufweist, in die eine erste Einkerbung (252; 352) eingearbeitet ist, die von mindestens einem ersten Stützbereich (253; 353) umrandet ist, und das zweite Einfassungsorgan (26; 36) eine zweite Außenfläche (260; 360) und eine zweite Innenfläche (261; 361) aufweist, in die eine zweite Einkerbung (263; 362) eingearbeitet ist, die von mindestens einem zweiten Stützbereich (263; 363) umrandet ist;
- Positionieren des ersten Einfassungsorgans (25; 35) und des zweiten Einfassungsorgans (26; 36) um das Primärelement (20; 30) herum, sodass das Primärelement (20; 30) im Inneren der ersten Einkerbung (252; 352) und der zweiten Einkerbung (263; 362) positioniert ist, und der mindestens eine erste Stützbereich (253; 353) und der mindestens eine zweite Stützbereich (263; 363) miteinander in Kontakt sind;
- fest Verbinden des mindestens einen ersten Stützbereichs (253; 353) und des mindestens einen zweiten Stützbereichs (263; 363), sodass das erste Einfassungsorgan (25; 35) und das zweite Einfassungsorgan (26; 36) die äußere Abdeckblende (21; 31) bilden, die das Primärelement (20; 30) mindestens teilweise einfasst.

2. Verfahren zur Abdeckung nach Anspruch 1, wobei die Korkteilchen eine Korngröße aufweisen, die zwischen 0,2 und 1 Millimeter liegt.

3. Verfahren zur Abdeckung nach einem der Ansprüche 1 und 2, wobei der wärmeverformbare Elastomer-Werkstoff aus einem wärmeverformbaren Elastomer, wie beispielsweise einem Polyurethan oder einem natürlichen Elastomer, wie beispielsweise einem Gummi ausgewählt ist.

4. Verfahren zur Abdeckung nach einem der Ansprüche 1 bis 3, wobei die Formgusszusammensetzung, in Gew.-Prozenten, zwischen 60 und 90% eines Gemisches aus Korkteilchen und zwischen 10 und 30% an wärmeverformbarem Elastomer-Werkstoff umfasst.

5. Verfahren zur Abdeckung nach einem der Ansprüche 1 bis 4, wobei das feste Verbinden des mindestens einen ersten Stützbereichs (253; 353) und des mindestens einen zweiten Stützbereichs (263; 363) durch ein Verkleben zwischen dem mindestens einen ersten Stützbereich (253; 353) und dem mindestens einen zweiten Stützbereich (263; 363) erfolgt, die in Kontakt sind.

6. Verfahren zur Abdeckung nach einem der Ansprüche 1 bis 5, wobei das Primärelement eine Bügelarmatur (30) für die optische Brille (1) ist, sodass das Funktionselement einen Bügel (3) der optischen Brille (1) darstellt.

7. Verfahren zur Abdeckung nach Anspruch 6, wobei die erste Einkerbung (352) durch zwei erste Stützbereiche (353) umrandet ist, die sich beiderseits der ersten Einkerbung (352) erstrecken, die zweite Einkerbung (362) durch zwei zweite Stützbereiche (363) umrandet ist, die sich beiderseits der zweiten Einkerbung (362) erstrecken, sodass die Bügelarmatur (30) vollkommen im Inneren der äußeren Abdeckblende (31) eingefasst ist.

8. Verfahren zur Abdeckung nach einem der Ansprüche 1 bis 5, wobei das Primärelement ein Paar von Gläsern (20) für die optische Brille (1) ist, sodass das Funktionselement eine Vorderseite der optischen Brille (1) darstellt.

9. Verfahren zur Abdeckung nach Anspruch 8, wobei die erste Einkerbung (252) durch einen einzigen ersten Stützbereich (353) umrandet ist, die zweite Einkerbung (263) durch einen einzigen zweiten Stützbereich (363) umrandet ist, sodass das Paar von Gläsern (20) teilweise im Inneren der äußeren Abdeckblende (21) mit Rändern (200) des Paares von Gläsern (20) eingefasst ist, die im Inneren der äußeren Abdeckblende (21) eingefasst sind.

10. Funktionselement (2; 3) einer optischen Brille (1), umfassend ein Primärelement (20; 30), das mindestens teilweise im Inneren einer äußeren Abdeckblende (21) eingefasst ist, wobei das Funktionselement (2; 3) **dadurch gekennzeichnet ist, dass** das Primärelement (20; 30) von der äußeren Abdeckblende (21; 31) durch das Umsetzen des Verfahrens zur Abdeckung nach einem der vorstehenden Ansprüche abgedeckt ist, sodass:
- die äußere Abdeckblende (21; 31) durch ein erstes Einfassungsorgan (25; 35) und ein zweites Einfassungsorgan (26; 36) gebildet wird, das durch einen Formguss einer Formgusszusammensetzung erhalten wird, welche mindestens ein Gemisch aus Korkteilchen in einem wärmeverformbaren Elastomer-Werkstoff umfasst;
- das erste Einfassungsorgan (25; 35) eine erste Außenfläche (250; 350) und eine erste Innenfläche (251; 351) aufweist, in die eine erste Einkerbung (252; 352) eingearbeitet ist, die von mindestens einem ersten Stützbereich (253; 353) umrandet ist, und das zweite Einfassungsorgan (26; 36) eine zweite Außenfläche (260; 360) und eine zweite Innenfläche (261; 361) aufweist, in die eine zweite Einkerbung (263; 362) eingearbeitet ist, die von mindestens einem zweiten Stützbereich (263; 363) umrandet ist;
- das Primärelement (20; 30) im Inneren der ersten Einkerbung (252; 352) und der zweiten Einkerbung (263; 362) positioniert ist, und der mindestens eine erste Stützbereich (253; 353) und der mindestens eine zweite Stützbereich (263; 363) miteinander in Kontakt, und fest miteinander verbunden sind.

11. Funktionselement nach Anspruch 10, wobei das Primärelement eine Bügelarmatur (30) für die optische Brille (1) ist, sodass das Funktionselement einen Bügel (3) der optischen Brille (1) darstellt.

12. Funktionselement nach Anspruch 11, wobei die erste Einkerbung (352) durch zwei erste Stützbereiche (353) umrandet ist, die sich beiderseits der ersten Einkerbung (352) erstrecken, die zweite Einkerbung (362) durch zwei zweite Stützbereiche (363) umrandet ist, die sich beiderseits der zweiten Einkerbung (362) erstrecken, sodass die Bügelarmatur (30) vollkommen im Inneren der äußeren Abdeckblende (31) eingefasst ist.

13. Funktionselement nach Anspruch 10, wobei das Primärelement ein Paar von Gläsern (20) für die optische Brille (1) ist, sodass das Funktionselement eine Vorderseite der optischen Brille (1) darstellt.

14. Funktionselement nach Anspruch 13, wobei die erste Einkerbung (252) durch einen einzigen ersten Stützbereich (353) umrandet ist, die zweite Einkerbung (263) durch einen einzigen zweiten Stützbereich (363) umrandet ist, sodass das Paar von Gläsern (20) teilweise im Inneren der äußeren Abdeckblende (21) mit Rändern (200) des Paares von Gläsern (20) eingefasst ist, die im Inneren der äußeren Abdeckblende (21) eingefasst sind.

15. Optische Brille (1), umfassend zwei Bügel (3) nach einem der Ansprüche 11 und 12.

16. Optische Brille (1), umfassend eine Vorderseite (2) nach einem der Ansprüche 13 und 14.

17. Optische Brille (1) nach den Ansprüchen 15 und 16, wobei die beiden Bügel (3) durch Scharniere (4) an der Vorderseite (2) angelenkt sind.

## Claims

1. A method for covering a primary element (20; 30) for optical spectacles (1), wherein at least a partial embedding of the primary element (20; 30) is implemented by an outer covering lining (21; 31) in order to obtain a functional element (2; 3) of optical spectacles (1), said covering method being **characterized in that** it comprises the following steps:
- preparing a molding composition comprising at least a mixture of cork particles into a thermoformable elastomeric material;
- making a first embedding member (25; 35) and a second embedding member (26; 36) by molding the molding composition, the first embedding member (25; 35) having a first outer face (250; 350) and a first inner face (251; 351) in which is formed a first groove (252; 352) bordered by at least one first bearing area (253; 353), and the second embedding member (26; 36) having a second outer face (260; 360) and a second inner face (261; 361) in which is formed a second groove (263; 362) bordered by at least one second bearing area (263; 363);
- positioning the first embedding member (25; 35) and the second embedding member (26; 36) around the primary element (20; 30), such that said primary element (20; 30) is positioned inside the first groove (252; 352) and the second groove (263; 362), and that the at least one first bearing area (253; 353) and the at least one second bearing area (263; 363) are in contact with one another;
- securing the at least one first bearing area (253; 353) and the at least one second bearing area (263; 363), so that the first embedding member (25; 35) and the second embedding member (26; 36) form the outer covering lining (21; 31) embedding at least partially the primary element (20; 30).

2. The covering method according to claim 1, wherein the cork particles have a particle size comprised between 0.2 and 1 millimeter.

3. The covering method according to any one of claims 1 and 2, wherein the thermoformable elastomeric material is selected from a thermoplastic elastomer, such as for example a polyurethane, or a natural elastomer, such as for example a rubber.

4. The covering method according to any one of claims 1 to 3, wherein the molding composition comprises, in percentage by mass, between 60 and 90% of cork particles mixture and between 10 and 30% of thermoformable elastomer material.

5. The covering method according to any one of claims 1 to 4, wherein securing of the at least one first bearing area (253; 353) and of the at least one second bearing area (263; 363) is achieved by gluing between the at least one first bearing area (253; 353) and the at least one second bearing area (263; 363) which are in contact.

6. The covering method according to any one of claims 1 to 5, wherein the primary element is an arm frame (30) for the optical spectacles (1), such that the functional element constitutes an arm (3) of optical spectacles (1).

7. The covering method according to claim 6, wherein the first groove (352) is bordered by two first bearing areas (353) extending on either side of said first groove (352), the second groove (362) is bordered by two second bearing areas (363) extending on either side of said second groove (362), so that the arm frame (30) is completely embedded inside the outer covering lining (31).

8. The covering method according to any one of claims 1 to 5, wherein the primary element is a pair of lenses (20) for the optical spectacles (1), so that the functional element constitutes a front part (2) of optical spectacles (1).

9. The covering method according to claim 8, wherein the first groove (252) is bordered by a single first bearing area (253), the second groove (263) is bordered by a single second bearing area (263), such that the pair of lenses (20) is partially embedded inside the outer covering lining (21) with edges (200) of the pair of lenses (20) embedded inside the outer covering lining (21).

10. A functional element (2; 3) of optical spectacles (1), comprising a primary element (20; 30) embedded at least partially inside an outer covering lining (21; 31), said functional element (2; 3) being **characterized in that** the primary element (20; 30) is covered with the external covering lining (21; 31) by the implementation of the covering method according to any one of the preceding claims, so that:
- the outer covering lining (21; 31) is formed of a first embedding member (25; 35) and a second embedding member (26; 36) obtained by molding a molding composition comprising at least one mixture of cork particles in a thermoformable elastomeric material;
- the first embedding member (25; 35) has a first outer face (250; 350) and a first inner face (251; 351) in which is formed a first groove (252; 352) bordered by at least one first bearing area (253; 353), and the second embedding member (26; 36) has a second outer face (260; 360) and a second inner face (261; 361) in which is formed a second groove (263; 362) bordered by at least one second bearing area (263; 363);
- the primary element (20; 30) is positioned inside the first groove (252; 352) and the second groove (263; 362), and the at least one first bearing area (253; 353) and the at least one second bearing area (263; 363) are in contact with one another and are secured to each other.

11. The functional element according to claim 10, wherein the primary element is an arm frame (30) for the optical spectacles (1), so that the functional element constitutes an arm (3) of optical spectacles (1).

12. The functional element according to claim 11, wherein the first groove (352) is bordered by two first bearing areas (353) extending on either side of said first groove (352), the second groove (362) is bordered by two second bearing areas (363) extending on either side of said second groove (362), so that the arm frame (30) is completely embedded inside the outer covering lining (31).

13. The functional element according to claim 10, wherein the primary element is a pair of lenses (20) for the optical spectacles (1), so that the functional element constitutes a front part of optical spectacles (1).

14. The functional element according to claim 13, wherein the first groove (252) is bordered by a unique first bearing area (253), the second groove (263) is bordered by a unique second bearing area (263), so that the pair of lenses (20) is partially embedded inside the outer covering lining (21) with edges (200) of the pair of lenses (20) embedded inside the outer covering lining (21).

15. Optical spectacles (1) comprising two arms (3) in accordance with any one of claims 11 and 12.

16. Optical spectacles (1) comprising a front part (2) in accordance with any one of claims 13 and 14.

17. The optical spectacles (1) according to claims 15 and 16, wherein the two arms (3) are articulated by hinges (4) on the front part (2).
